## Europäisches Patentamt
## European Patent Office
## Office européen des brevets

(19)

(11) Veröffentlichungsnummer: **0 138 057**
**B1**

(12)
# EUROPÄISCHE PATENTSCHRIFT

(45) Veröffentlichungstag der Patentschrift:
28.01.87

(51) Int. Cl.⁴: **C 04 B 7/43**

(21) Anmeldenummer: **84110867.3**

(22) Anmeldetag: **12.09.84**

(54) Verfahren und Anlage zur Herstellung von an Schadstoffen armem, insbesondere alkaliarmem Zementklinker.

(30) Priorität: **17.09.83 DE 3333705**

(43) Veröffentlichungstag der Anmeldung:
**24.04.85 Patentblatt 85/17**

(45) Bekanntmachung des Hinweises auf die Patenterteilung:
**28.01.87 Patentblatt 87/5**

(84) Benannte Vertragsstaaten:
**AT DE FR GB**

(56) Entgegenhaltungen:
**CH - A - 565 979**
**DE - A - 2 712 239**
**DE - B - 1 303 507**
**LU - A - 83 829**

(73) Patentinhaber: **Klöckner-Humboldt-Deutz Aktiengesellschaft,
Deutz-Mülhelmer-Strasse 111 Postfach 80 05 09,
D-5000 Köln 80 (DE)**

(72) Erfinder: **Herchenbach, Horst, Sonnenweg 6,
D-5202 Hennef 1 (DE)**

(74) Vertreter: **Beisner, Klaus, Dipl.-Ing. et al, c/o KHD
Humboldt Wedag AG Patente und Lizenzen
Wiersbergstrasse Postfach 91 04 57,
D-5000 Köln 91 (DE)**

## Beschreibung

Die Erfindung betrifft ein Verfahren zur Herstellung von an Schadstoffen armem, insbesondere alkaliarmem Zementklinker aus schadstoffhaltigen Rohmaterialien, wobei diese in einem Brennprozess mit Vorwärmstufe, Entsäuerungsstufe, Sinterstufe und Kühlstufe thermisch behandelt werden und sowohl in der Entsäuerungs- als auch in der Klinkerstufe Brennstoff sowie Brennluft zugeführt wird, wobei in der Entsäuerungsstufe vom vorgewärmten Rohmehl eine Teilmenge in einem Brennluft und Brennstoff enthaltenden Reaktionsgasstrom, und eine andere Teilmenge im Abgasstrom der Klinkerstufe entsäuert beziehungsweise teilentsäuert wird, wobei der Reaktionsgasstrom und der Abgasstrom in der Entsäuerungsstufe getrennt geführt sind.

Die Erfindung betrifft auch eine Anlage zur Durchführung des Verfahrens.

Die nachteiligen Folgen unzulässig hoher Alkaligehalte im Zement sind bekannt. Sie führen unter anderem unter Verkürzung der Abbindezeit zum sogenannten Umschlagen des Zementes und führen zu Ausblühungen von Alkalisulfaten im Beton sowie infolge Reaktion mit Zuschlagstoffen zum Treiben des Zements und in der Folge zu erheblicher Festigkeitsverringerung des Betons.

Weil beim Brennen von Zementklinker unter Verwendung schadstoffhaltiger Rohmaterialien Alkalien-Verbindungen, beispielsweise Alkalichloride, Alkalisulfate bei hohen Brenntemperaturen im Brennofen verflüchtigt und bei Unterschreiten der Kondensationstemperatur durch direkten Wärmeaustausch mit Rohmehl an diesen niedergeschlagen und wieder in den Brennprozess geführt werden, ergeben sich die bekannten Alkalikreisläufe im Material- und Gasstrom, die zu unzulässigen Alkalianreicherungen im Zementklinker sowie zu Anbackungen von Alkaliverbindungen im Brennanlagensystem führen.

Es sind bereits Zementbrennverfahren und entsprechende Anlagen entwickelt worden und bekannt, mit denen es gelingt, die geschilderten Nachteile zu vermeiden und denen es gelingt, Rohmaterialien mit schwankenden und zeitweise hohen Alkaliengehalten mit geringstmöglichen Wärmeverlusten sowie unter Vermeidung von schädlichen Alkalienkreisläufen im Anlagensystem unter Vermeidung grösserer Wärmeverluste zu verarbeiten (DE-OS 27 12 239).

Das bekannte Verfahren sieht vor, dass wenigstens ein Teil der alkalihaltigen Abgase in Abhängigkeit von darin enthaltenen Schadstoffen aus der Sinterstufe abgezogen, etwa auf das Temperaturniveau der Brennagase aus der Entsäuerungsstufe abgekühlt und mit diesen Brenngasen in der Vorwärmstufe vermischt und zur thermischen Behandlung des Rohmaterials herangezogen wird, und dass der andere Teil der alkalihaltigen Abgase der Sinterstufe aus dem Brennprozess entfernt wird. Die entsprechende Vorrichtung besitzt eine an einen Drehrohrofen angeschlossene Abgasleitung, welche unter Umgehung der Kalziniereinrichtung mit dem Zyklonvorwärmer derart verbunden ist, dass diese Abgasleitung und die Gasleitung der Kalziniereinrichtung in ein und denselben Zyklon, vorzugsweise in den untersten Zyklon des Zyklonvorwärmers münden.

Der Erfindung liegt die Aufgabe zugrunde, den mit dem bekannten Verfahren und der Anlage erreichten Stand der Technik weiter zu verbessern. Insbesondere soll die Leistungsfähigkeit der Entsäuerungsstufe sowie deren Anpassungsfähigkeit an unterschiedliches Entsäuerungsverhalten nach Massgabe der stofflichen Eigenschaften und insbesondere des Agglomerationsverhaltens vom vorgewärmten Rohmehl so weit als möglich verbessert beziehungsweise optimiert werden.

Die Lösung der gestellten Aufgabe gelingt bei einem Verfahren der eingangs genannten Art, wobei in der Entsäuerungsstufe vom vorgewärmten Rohmehl eine Teilmenge in einem Brennluft und Brennstoff enthaltenden Reaktionsgasstrom und eine andere Teilmenge im Abgasstrom der Klinkerstufe entsäuert beziehungsweise teilentsäuert wird, wobei der Reaktionsgasstrom und der Abgasstrom in der Entsäuerungsstufe getrennt geführt sind, dadurch, dass der Reaktionsgasstrom und der Abgasstrom der Klinkerstufe vor dem Einleiten in die unterste Wärmetauscherzone der Vorwärmstufe zu einem einzigen Suspensionsgasstrom miteinander vereinigt werden.

Mit dem erfindungsgemässen Verfahren ergibt sich überraschenderweise der Vorteil, dass der Wirkungsgrad der Entsäuerung in der Entsäuerungsstufe verbessert wird. Dies hängt offensichtlich damit zusammen, dass beim Zusammenführen und homogenen Vermischen der in den beiden Gasströmen enthaltenen, auf unterschiedliche Entsäuerungsgrade in unterschiedlichen Gasatmosphären gebrannten Feststoffpartikel, von denen die im Ofenabgasstrom thermisch behandelten Feststoffpartikeln gegebenenfalls teilweise Anlagerungen von Schadstoffkondensaten aufweisen, die Agglomerationswilligkeit der Partikel zu grösseren, schwieriger zu entsäuernden Agglomeraten wenigstens zum Teil verhindert wird. Hinzu kommt mit Vorteil ein nahezu völliger Temperaturausgleich der beiden Gasströme sowie eine gleichmässige Verteilung der Partikelstromdichte im vereinigten Suspensionsgasstrom. Darüberhinaus wird infolge dieser homogenen Vereinigung mit Vorteil der Vollzug des Wärmeaustausches im Suspensionsgasstrom durchströmten untersten Wärmetauscherzyklon der Vorwärmstufe optimiert und darüberhinaus dessen Abscheidequalität verbessert.

Und schliesslich ergibt sich darüberhinaus mit Vorteil ein verbessertes, insbesondere erleichtertes Regelungsverhalten dadurch, dass unbeschadet unterschiedlicher, im Bypass abgeführter Ofengasmengen und eines hier durch unterschiedlichen Gasmengenstromes im Abgasstrom der Klinkerstufe die Zumessung der eingeleiteten Rohmehlmenge zwischen weitergezogenen Toleranzgrenzen gezogen werden kann.

Weitere vorteilhafte Ausgestaltungen ergeben sich mit dem Verfahren in an sich bekannter Weise dadurch, dass der Abgasstrom nach Austritt aus der Klinkerstufe durch Einleiten vorgewärmten Rohmehls auf eine Temperatur unterhalb der Kondensationstemperatur der Schadstoffe abgekühlt wird, und dass nach Massgabe der Schadstoffkonzentration im Abgas ein Teilabzug von Abgas vorgenommen und dieses gegebenenfalls zusammen mit Schadstoff beladenen Mehlanteilen aus dem Brennprozess entfernt wird.

Eine Anlage zur Herstellung von an Schadstoffen armem, insbesondere alkaliarmem Zementklinker aus schadstoffhaltigen Rohmaterialien mit einer Vorwärmstufe mit zonenweise in Reihe angeordneten Wärmetauscherzyklonen, mit einer Entsäuerungsstufe, einer Klinkerstufe mit einem Klinkerbrennofen und einer Kühlstufe, bei der in der Entsäuerungsstufe wenigstens ein im wesentlichen vertikaler, an eine Brennluft führende Leitung angeschlossener, mit wenigstens einer Brennstoffaufgabeeinrichtung ausgestatteter Reaktionsschacht sowie eine vom Einlaufkopf des Klinkerbrennofens ausgehende, Ofenabgas der Klinkerstufe führende Leitung angeordnet und über Mehlzufuhrleitungen an eine Einrichtung zur Teilung des in der Vorwärmstufe aufgewärmten Rohmehls angeschlossen sind, ist nach der Erfindung so ausgebildet, dass die Leitung für das Ofenabgas in den Reaktionsschacht vor dessen Einmündung in die Vorwärmstufe einmündet.

Im folgenden wird die Erfindung mit ihren Vorteilen anhand eines in der Zeichnung schematisch dargestellten Ausführungsbeispieles näher erläutert.

Es zeigen:

Fig. 1 eine schematische Darstellung einer Zementbrennanlage mit einer aus mehreren Zyklonvorwärmern bestehenden Vorwärmstufe, einer Entsäuerungsstufe, einer Sinterstufe und einer Kühlstufe,

Fig. 2 eine schematische Darstellung einer Zementbrennanlage mit zwei parallel zueinander angeordneten, aus mehreren Zyklonen bestehenden Schwebegasvorwärmern, sowie einer mehrsträngigen Entsäuerungs- und einer gemeinsamen Sinterstufe und Kühlstufe.

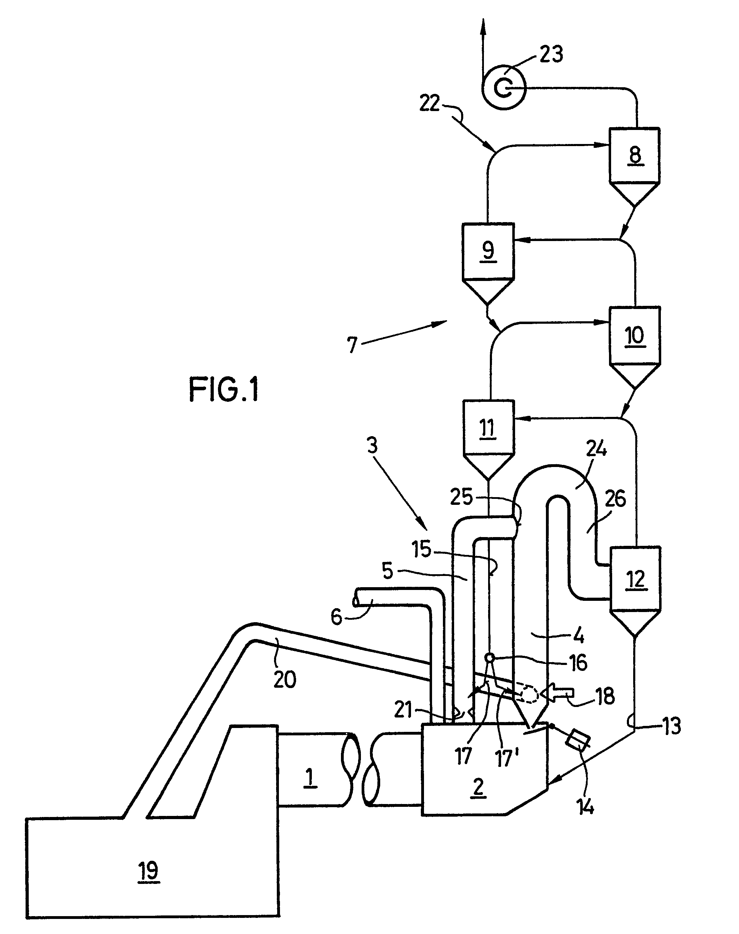

Die in Fig. 1 dargestellte Zementbrennanlage besitzt in der Klinkerstufe einen Drehrohrofen 1 mit einem Ofeneinlaufgehäuse beziehungsweise Ofeneinlaufkopf 2. In der Entsäuerungsstufe 3 ist ein vertikaler Reaktionsschacht 4 angeordnet und parallel zu diesem die Ofenabgasleitung 5. Ferner ist an den Ofeneinlaufkopf 2 eine Bypassleitung 6 angeschlossen und dient zum Abführen schadstoffhaltiger Ofenabgase. Oberhalb der Entsäuerungsstufe 3 ist der Schwebegaswärmetauscher 7 angeordnet und mit den Zyklonstufen 8 bis 12 ausgebildet. Von der untersten Zyklonstufe 12 führt eine Leitung 13 kalziniertes Mehl durch den Ofeneinlaufkopf 2 in den Drehrohrofen 1. Der Reaktionsschacht 4 ist in seinem unteren Bereich mit einem Pendelklappenverschluss 14 verschlossen. Durch diesen Pendelklappenverschluss 14 kann von Zeit zu Zeit im unteren Bereich des Reaktionsschachtes 4 angesammeltes Grobgut abgezogen werden. Vom vorletzten Zyklon 11 der Vorwärmstufe 7 führt eine Falleitung 15 für vorgewärmtes Rohmehl zu einer Mehlweiche 16. Diese dient zur Aufteilung des vorgewärmten Rohmehls in Teilmengenströme, die mittels Mehlzuteilleitungen 17, 17' einerseits in das Ofenabgasrohr 5 und andererseits in den Reaktionsschacht 4 eingeleitet werden. Der Mehleinleitungsstelle 17' am Reaktionsschacht 4 gegenüberliegend angeordnet befindet sich eine Brennstoffzuteileinrichtung 18. In gleicher Höhe ist ferner ein Rohr 20 angeschlossen, welches heisse Brennluft aus dem Kühler 19 in den Reaktionsschacht 4 einleitet. Unterhalb der Mehlzuteilungsstelle 17 ist im Ofenabgasrohr 5 eine Drosselstelle 21 angeordnet. Diese führt zu einer Geschwindigkeitserhöhung der Gasströmung und damit zu einer vorteilhaften Aufteilung des eingeleiteten Rohmehls zu einer homogenen Suspension. Gleichzeitig findet durch die oberhalb der Drosselstelle 21 herrschende energiereiche Strömung ein äusserst intensiver direkter Wärmeaustausch zwischen dem vorgewärmten Mehl und dem Ofenabgas statt. Dabei wird das Ofenabgas unter die Kondensationstemperatur der verflüchtigten Schadstoffe gekühlt und diese kondensieren an der hohen aktiven Oberfläche der Mehlpartikel. Gleichzeitig erzeugen diese Mehlpartikel, ähnlich einem Sandstrahlgebläse eine infolge ihrer Bewegungsenergie abrasive Wirkung und verhindern sowohl durch die Kondensation der Schadstoffe als auch durch diese abrasive Wirkung die Entstehung von schädlichen Anbackungen. Rohmehl wird der Anlage an der Stelle 22 aufgegeben, während Abgas nach Entzug seines nutzbaren Wärmeeinhaltes an das Rohmehl mit dem Ventilator 23 in regelbarer Menge aus der Anlage abgezogen wird. Entsprechend der Erfindung ist vorgesehen, dass der Reaktionsschacht 4 und das Ofenabgasrohr getrennt durch die Entsäuerungsstufe 3 geführt wird, und dass die Leitung für das Ofenabgas, das sogenannte Ofenabgasrohr 5 in den Reaktionsschacht 4 vor dessen Einmündung in die Vorwärmstufe 7 einmündet. Die Vereinigung der beiden Leitungen ist an der Einmündungstelle 25 vorgesehen, von wo ab beide einen gemeinsamen Leitungsstrang 26 bilden, der in den untersten Wärmetauscherzyklon 12 der Vorwärmstufe 7 einmündet.

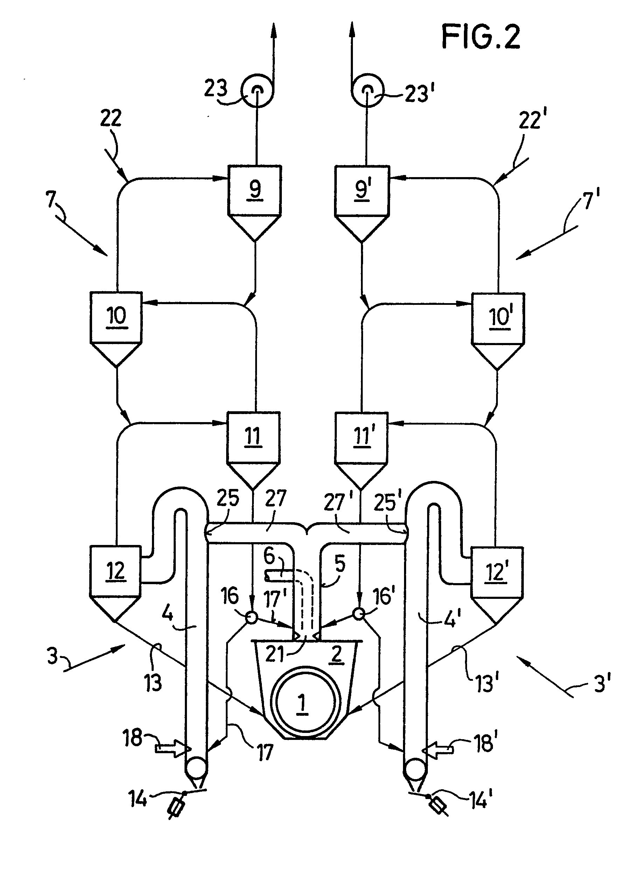

Die im Funktionsprinzip gleiche Zementbrennanlage nach Fig. 2 unterscheidet sich von derjenigen in Fig. 1 dadurch, dass sie eine zweisträngige Entsäuerungsstufe 3, 3' sowie eine zweisträngige Vorwärmstufe 7, 7' aufweist. Würde man die linke Hälfte des Funktionsschemas der Brennanlage in Fig. 2 abdecken, so ergäbe sich das gleiche Anlageschema wie in Fig. 1. Die Gründe für die doppelsträngige Ausführung einer Zementbrennanlage sind bekannt und wurden bereits in der Fachliteratur so weitgehend erörtert, dass an dieser Stelle ein nochmaliges Eingehen hierauf sich erübrigt. Es sei lediglich so viel gesagt, dass eine doppelsträngige Anlage, insbesondere bei sehr hohen Durchsatzraten regeltechnisch besser zu beherrschen ist als eine einsträngige Anlage mit sehr grossen Durchsatzquerschnitten.

Erfindungsgemäss ist bei der in Fig. 2 dargestellten Anlage, bei der im übrigen gleiche Funktionselemente mit gleichen Ziffern bezeichnet sind wie in Fig. 1, vorgesehen, dass das Ofenabgasrohr 5 im wesentlichen mittig auf dem Ofeneinlaufkopf angeordnet ist. Diesem sind zu beiden Seiten und parallel zwei Reaktionsschächte 4, 4' in mitten symmetrischer Aufstellung zugeordnet. Das Ofenabgasrohr 5 ist in zwei symmetrisch abgezweigte Leitungsäste 27, 27' unterteilt, die ihrerseits an den Stellen 25, 25' in die Reaktionsschächte 4 beziehungsweise 4' einmünden.

Die Arbeitsweise der dargestellten Anlage ist folgende:

Das dem Zyklonvorwärmer 7 in Fig. 1 im oberen Bereich bei 22 aufgegebene kalte Zementrohmehl durchsetzt die Zyklone 8, 9, 10 und 11. Aus disesem gelangt das nunmehr vorgewärmte Rohmehl durch die Falleitung 15 in die Mehlweiche 16, worin es in zwei Teilströme aufgeteilt wird. Einer der Teilströme wird in das Ofenabgasrohr 5 eingeleitet, und zwar unmittelbar oberhalb einer am Fuss dieser Leitung eingebauten Drosselstelle 21. Hinsichtlich der damit erzielbaren Wirkung wird auf die weiter oben gemachten Erläuterungen hingewiesen. Der andere Teil des aufgeteilten Rohmehlstromes gelangt über die Mehlzuteilleitung 17' in den Fuss des Reaktionsschachtes 4 und wird dort durch die Schleppkräfte der eingeleiteten Heissluft in eine auswärts gerichtete Strömung eingetragen. In diese Strömung wird ebenfalls im Bereich der Einleitungsstelle von Mehl und Heissluft Brennstoff mit der Aufgabeeinrichtung 18 aufgegeben. Dieser vermischt sich mit dem Suspensionsgasstrom von Heissluft und Mehl zu einem Reaktionsgasstrom, in welchem durch die hohe Temperatur von annähernd 900 bis 950°C und den herrschenden hohen Sauerstoff-Partialdruck die Entsäuerung des heissen Rohmehles sehr intensiv vonstatten geht. Auch im Ofenabgasrohr 5 wird durch noch vorhandenen freien Sauerstoff und den Wärmeinhalt der Ofengase eine zumindest teilweise Entsäuerung des eingetragenen Rohmehles vollzogen. An der Zusammenführungsstelle 25 findet eine innige Vermischung der unterschiedlichen Suspensionsströme statt. Dabei mischen sich weitgehend kalzinierte Gutpartikel mit teilweise kalzinierten Gutpartikeln.

Letztere sind teilweise je nach Schadstoffkonzentration im Ofenabgas an ihren Oberflächen mit Schadstoffkondensat beladen. Durch die innige Vermischung der beiden Gas-Partikelströme an der Einleitungsstelle 25 und im folgenden Leitungsteil 24, 26 werden die unterschiedlich entsäuerten Partikel miteinander in der Gasphase homogen gemischt und dabei unter restloser Verprennung noch vorhandener unreagierter Sauerstoff- und Brennstoffanteile weiter kalziniert. Dabei verhindert die Mischung der unterschiedlichen Partikel einerseits durch deren stoffliche Unterschiede und andererseits durch den an der Mischungsstelle entstehenden energiereichen Strömungszustand die Ausbildung von Agglomeraten. Hierdurch wird eine weitgehende Entsäuerung begünstigt. Der so aus den beiden Teilströmen vereinigte Gesamtstrom der partikelbeladenen Suspension gelangt durch den gemeinsamen Leitungsstrang 26 in geschlossener Strömung in die unterste Zyklonstufe 12. In dieser wird das Gas vom Feststoff geschieden und der Feststoff mit der Leitung 13 durch den Ofeneinlaufkopf 2 in den Drehrohrofen 1 eingetragen.

Wie bereits vorgängig erwähnt, wird durch die Strömungsvereinigung die Entsäuerungswirkung der Entsäuerungsstufe 3 und darüberhinaus der in der Zyklonstufe 12 sich letztmalig vollziehende Wärmeaustausch sowie der Abscheidungseffekt verbessert. Darüberhinaus hat die Zusammenführung der Strömung in einem gemeinsamen Leitungsstrang 26 den Vorteil, dass die Bauweise des Abscheiderzyklons 12 vereinfacht und dieser in seiner Höhe trotz besserer Funktion verringert werden kann. dadurch werden Investitions- und Unterhaltungskosten reduziert.

Da die Funktion der doppelsymmetrisch ausgeführten Brennanlage gemäss Fig. 2 im Prinzip funktionsgleich ist, bedarf es hierzu keiner weiteren Funktionserläuterung.

Die der Erfindung zugrundegelegte Aufgabenstellung wird demnach mit der aufgezeigten Lösung optimal und mit sehr wirtschaftlichen Mitteln erreicht.

**Patentansprüche**

1. Verfahren zur Herstellung von an Schadstoffen armem, insbesondere alkaliarmem Zementklinker aus schadstoffhaltigen Rohmaterialien, wobei diese in einem Brennprozess mit Vorwärmstufe, Entsäuerungsstufe, Sinterstufe und Kühlstufe thermisch behandelt werden und sowohl in der Entsäuerungs- als auch in der Klinkerstufe Brennstoff sowie Brennluft zugeführt wird, wobei in der Entsäuerungsstufe vom vorgewärmten Rohmehl eine Teilmenge in einem Brennluft- und Brennstoff enthaltenden Reaktionsgasstrom, und eine andere Teilmenge im Abgasstrom der Klinkerstufe entsäuert beziehungsweise teilentsäuert wird, wobei der Reaktionsgasstrom und der Abgasstrom in der Entsäuerungsstufe getrennt geführt sind, dadurch gekennzeichnet, dass der Reaktionsgasstrom und der Abgasstrom der Klinkerstufe vor dem Einleiten in die unterste Wärmetauscherzone der Vorwärmstufe zu einem einzigen Suspensionsgasstrom miteinander vereinigt werden.

2. Verfahren nach Anspruch 1, dadurch gekennzeichnet, dass der Abgasstrom nach Austritt aus der Klinkerstufe durch Einleiten vorgewärmten Rohmehls auf eine Temperatur unterhalb der Kondensationstemperatur der Schadstoffe abgekühlt wird.

3. Verfahren nach einem der Ansprüche 1 oder 2, dadurch gekennzeichnet, dass nach Massgabe der Schadstoffkonzentration im Ofenabgas ein Teilabzug von Ofenabgas vorgenommen und dieses gegebenenfalls zusammen mit Schadstoff beladenen Mehlanteilen aus dem Brennprozess entfernt wird.

4. Anlage zur Herstellung von an Schadstoffen armem, insbesondere alkaliarmem Zementklinker aus schadstoffhaltigen Rohmaterialien, mit einer Vorwärmstufe mit zonenweise in Reihe angeordneten Wärmetauscherzyklonen, einer Entsäuerungsstufe, einer Klinkerstufe mit einem Klinkerbrennofen und einer Kühlstufe, bei der in der Entsäuerungsstufe wenigstens ein im wesentlichen vertikaler, an eine Brennluft führende Leitung angeschlossener, mit wenigstens einer Brennstoffaufgabeeinrichtung ausgestatteter Reaktionsschacht sowie eine vom Einlaufkopf des Klinkerbrennofens ausgehende, Ofenabgas der Klinkerstufe führende Leitung angeordnet und über Mehlzufuhrleitungen an eine Einrichtung zur Teilung des in der Vorwärmstufe aufgewärmten Rohmehls angeschlossen sind, dadurch gekennzeichnet, dass die Leitung (5) für das Ofenabgas in den Reaktionsschacht (4) vor dessen Einmündung in die Vorwärmstufe (7, 7') einmündet.

5. Anlage nach Anspruch 4, dadurch gekennzeichnet, dass der Reaktionsschacht (4) und die Leitung (5) für das Ofenabgas zu einem einzigen Kanal vereinigt sind, und dass dieser tangential an den untersten Wärmetauscherzyklon der Vorwärmstufe (7) angeschlossen ist.

6. Anlage nach einem der Ansprüche 4 oder 5, dadurch gekennzeichnet, dass an den Einlaufkopf (2) des Klinkerbrennofens (1) eine Bypassleitung (6) angeschlossen ist, welche zum Abführen regelbarer Mengen von schadstoffhaltigem Ofenabgas aus der Anlage mit einem Regelschieber und vorzugsweise mit zusätzlichen Mitteln zum Konditionieren, insbesondere zum Kühlen und Entstauben des abgeführten Gases ausgestattet ist.

7. Anlage nach einem der Ansprüche 4 bis 6, dadurch gekennzeichnet, dass diese in der Entsäuerungsstufe mit zwei parallelen Reaktionsschächten (4, 4') und einer dazwischen angeordneten Ofenabgasleitung (5) sowie vorzugsweise mit einer Doppelstrang-Vorwärmstufe ausgestattet ist, wobei die Ofenabgasleitung (5) im Bereich der Vereinigung mit den beiden Reaktionsschächten (4, 4') mit einer Verzweigung in zwei Zweigleitungen (27, 27') ausgebildet ist.

8. Anlage nach Anspruch 7, dadurch gekennzeichnet, dass die Ofenabgasleitung (5) an den mittleren Bereich des Ofeneinlaufkopfes (2) angeschlossen und die beiden Reaktionsschächte (4, 4') symmetrisch zu beiden Seiten der Leitung angeordnet sind.

9. Anlage nach einem der Ansprüche 4 bis 8, dadurch gekennzeichnet, dass die Ofenabgasleitung (5) zwischen der Anschlussstelle der Mehlzufuhrleitungen und des Ofeneinlaufkopfes (2) mit einer Querschnittsverengung ausgebildet ist.

**Claims**

1. A process for the production of cement clinker having a low content of harmful substances, particularly a low alkali content, from raw materials containing harmful substances, wherein these are heat treated in a burning process with preheating stages, deacidification stage, sintering and cooling stage and fuel and combustion air are supplied both in the deacidification and in the clinker stage, wherein, in the deacidification stage, some of the preheated raw meal is deacidified or partially deacidified in a stream of reaction gas containing combustion air and fuel and another component part is deacidified or partially deacidified in the waste-gas stream from the clinker stage, and wherein the stream of reaction gas and the steam of waste gas are conveyed in the deacidification stage, characterised in that the stream of reaction gas and the stream of waste gas from the clinker stage are united with one another to form a single stream of suspension gas before being introduced into the lowest heat-exchanger region of the preheating stage.

2. A process as claimed in Claim 1, characterised in that, after emerging from the clinker stage, the stream of waste gas is cooled to a temperature below the condensation temperature of the harmful substances by the introduction of preheated raw meal.

3. A process as claimed in Claim 1 or 2, characterised in that, according to the concentration of harmful substances in the kiln waste gas, some of the kiln waste gas is drawn off and this is removed from the burning process possibly together with meal components laden with harmful substances.

4. A plant for the production of cement clinker having a low content of harmful substances particularly a low alkali content, from raw materials containing harmful substances, having a preheating stage with heat-exchanger cyclones connected in succession in zones, a deacidification stage, a clinker stage with a clinker burning kiln and a cooling stage, wherein at least one substantially vertical reaction shaft, which is connected to a conduit conveying combustion air and equipped with at least one fuel feed device as well as a conduit originating from the inlet head of the clinker burning kiln and conveying kiln waste gas from the clinker stage are disposed in the deacidification stage and are connected, through meal supply pipes, to a device for dividing the raw meal heated up in the preheating stage, characterised in that the conduit (5) for the kiln waste gas leads into the reaction shaft (4) before this leads into the preheating stage (7, 7').

5. A plant as claimed in Claim 4, characterised in that the reaction shaft (4) and the conduit (5) for the kiln waste gas are united to form a single conduit and that this is connected tangentially to the lowest heat-exchanger cyclone of the preheating stage (7).

6. A plant as claimed in Claim 4 or 5, characterised in that connected to the inlet head (2) of the clinker burning kiln (1) is a by-pass pipe (6) which, in order to remove controllable amounts of kiln waste gas containing harmful substances from the plant, is equipped with a governor slide valve and preferably with additional means for conditioning the gas drawn off, particularly for cooling it and freeing it from dust.

7. A plant as claimed in any of Claims 4 to 6, characterised in that this is equipped, in the deacidification stage, with two parallel reaction shafts (4, 4') and a kiln waste-gas pipe (5) disposed in between as well as preferably with a double-strand preheating stage, the kiln waste-gas pipe (5) being constructed with a branching into two branch pipes (27, 27') in the region where it is united to the two reaction shafts (4, 4').

8. A plant as claimed in Claim 7, characterised in that the kiln waste-gas pipe (5) is connected to the central region of the kiln inlet head (2) and the two reaction shafts (4, 4') are disposed symmetrically at each side of the pipe.

9. A plant as claimed in any of Claims 4 to 8, characterised in that the kiln waste-gas pipe (5) is provided with a construction in cross-section between the connection point of the meal supply and the kiln inlet head (2).

**Revendications**

1. Procédé pour la fabrication de clinker de ciment pauvre en substances nuisibles, en particulier en alcalis, à partir de matières premières contenant des substances nuisibles, selon lequel on soumet les matières premières à un traitement thermique dans un processus de cuisson comportant une étape de préchauffage, une étape de décarbonatation, une étape d'agglomération par frittage et une étape de refroidissement, avec amenée de combustible et d'air de combustion à la fois dans l'étape de décarbonatation et dans l'étape de clinkérisation, et selon lequel, dans l'étape de décarbonatation, on produit la décarbonatation d'une partie de la farine crue préchauffée dans un courant gazeux réactionnel contenant de l'air de combustion et du combustible et la décarbonatation partielle d'une autre partie de cette farine dans l'effluent gazeux de l'étape de clinkérisation, le courant gazeux réactionnel et l'effluent gazeux étant maintenus séparés dans l'étape de décarbonatation, caractérisé en ce que, avant l'introduction dans la zone d'échange de chaleur la plus basse de l'étape de préchauffage, on réunit le courant gazeux réactionnel et l'effluent gazeux de l'étape de clinkérisation en un seul courant gazeux de suspension.

2. Procédé selon la revendication 1, caractérisé en ce que, après sa sortie de l'étape de clinkérisation, on refroidit l'effluent gazeux à une température au-dessous de la température de condensation des substances nuisibles par introduction de farine crue préchauffée.

3. Procédé selon la revendication 1 ou 2, caractérisé en ce que, suivant la concentration de substance nuisible dans l'effluent gazeux du four, on retire une partie de l'effluent gazeux du four et on l'élimine du processus de cuisson, éventuellement ensemble avec des fractions de farine chargées de substance nuisible.

4. Installation pour la fabrication de clinker de ciment pauvre en substances nuisibles, en particulier en alcalis, comprenant une zone de préchauffage avec des cyclones échangeurs de chaleur disposés en série par zones, une zone de décarbonatation, une zone de clinkérisation avec un four de cuisson de clinker et une zone de refroidissement, de même que, dans la zone de décarbonatation, au moins un conduit à réaction essentiellement vertical, raccordé à une canalisation traversée par de l'air de combustion et équipé d'au moins un dispositif d'alimentation en combustible, ainsi qu'une canalisation partant de la tête d'entrée du four de cuisson de clinker et traversée par de l'effluent gazeux du four de la zone de clinkérisation, le conduit à réaction et cette canalisation étant raccordés à travers des canalisations d'amenée de farine à un dispositif pour diviser la farine crue préchauffée dans la zone de préchauffage, caractérisée en ce que la canalisation (5) pour l'effluent gazeux du four débouche dans le conduit à réaction (4) avant l'embouchure de celui-ci dans la zone de préchauffage (7, 7').

5. Installation selon la revendication 4, caractérisée en ce que le conduit à réaction (4) et la canalisation (5) pour l'effluent gazeux du four sont réunis en un seul canal et que ce canal est branché tangentiellement sur le cyclone échangeur le plus bas de la zone de préchauffage (7).

6. Installation selon la revendication 4 ou 5, caractérisée en ce qu'une canalisation de dérivation (6) est branchée sur la tête d'entrée (2) du four de cuisson de clinker (1) pour l'évacuation de quantités réglables d'effluent gazeux du four contenant des substances nuisibles hors de l'installation, canalisation qui est équipée d'un registre de réglage et, de préférence, de moyens supplémentaires pour conditionner, en particulier pour refroidir et dépoussiérer le gaz évacué.

7. Installation selon une des revendications 4 à 6, caractérisée en ce qu'elle est équipée, dans la zone de décarbonatation, de deux conduits à réaction parallèles (4, 4') et d'une canalisation d'effluent gazeux du four (5) disposée entre eux, ainsi que, de préférence, d'une zone de préchauffage à double brin, la canalisation d'effluent du four (5) étant munie d'une bifurcation en deux branchements (27, 27') dans la région de raccordement aux deux conduits à réaction (4, 4').

8. Installation selon la revendication 7, caractérisée en ce que la canalisation d'effluent gazeux du four (5) est raccordée sur la partie médiane de la tête d'entrée (2) du four et que les deux conduites à réaction (4, 4') sont disposés symétriquement de part et d'autre de cette canalisation.

9. Installation selon une des revendications 4 à 8, caractérisée en ce que la canalisation d'effluent gazeux du four (5) est pourvue d'un rétrécissement de section entre le point de raccordement des canalisations d'amenée de farine et la tête d'entrée (2) du four.

FIG.1

FIG.2

0 138 057

9